# EUROPEAN PATENT APPLICATION

(11) **EP 1 816 456 A1**
(43) Date of publication of application: **08.08.2007**
(21) Application number: 05254830.2
(22) Date of filing: 02.08.2005
(51) Int. Cl.: G01L 3/10

(54) **Method and apparatus for measuring the torque on the camshaft of an internal combustion engine**

(71) Applicant: CASTROL LIMITED, Swindon Wiltshire SN3 1RE (GB)
(72) Inventor: Mufti, Riaz Ahmad, Didcot, Oxon OX11 7XQ (GB)
(74) Representative: Perkins, Nicholas David

(57) **Abstract**

An apparatus and method for the measurement of torque experienced by a camshaft in the valve train of an internal combustion engine. The apparatus comprises a camshaft having at least one camshaft lobe group, characterised in that at least one camshaft lobe group has one or more torque transducers. The method comprises the steps of;
(a) providing the camshaft with one or more torque transducers, such that at least one camshaft lobe group has one or more torque transducers,
(b) operating the internal combustion engine to rotate the camshaft,
(c) transmitting the signals from the one or more torque transducers to a signal processor, and
(d) processing the signals in the signal processor to provide quantitative data representing the torque of the camshaft in the valve train.

## Description

The present invention relates to the measurement of torque, and in particular to a method and apparatus for the measurement of torque on a camshaft in the valve train of an internal combustion engine.

Lubrication is an often used and effective means of improving an engine's efficiency by reducing the friction experienced by engine components during operation. Consequently, an important aspect of research into lubrication is the ability to measure friction experienced by different engine components. However, some parts of an engine are more difficult to study than others, and this is found to be so for an engine's valve train.

The torque experienced by a camshaft of an internal combustion engine (the drive torque) is composed of frictional torque and geometrical torque. The frictional torque is a function of lubrication. Geometric torque arises from the force required to open the valves against the resistance of the valve spring, the energy from which is stored in the valve spring and returned to the camshaft as torque in the opposite rotational direction as the valve closes.

It is known to measure torque experienced by the camshaft of the valve train of an engine by rotating the valve train's camshaft by an external device fitted with a means of measuring torque. However, one disadvantage with this method is that, because the camshaft is rotated by an external device rather than by the engine itself, the camshaft may not experience the same forces as if it were rotated by the engine in which it is located. In addition, the external device applies a force to one end of the camshaft, which can lead to an increase in vibrational distortion.

In an article in the Proceedings of the 2002 ASME STLE Joint International Tribology Conference, Cancun, Mexico, October 2002 (pp 1 to 12), Mufti et al describe using a torque transducer on the camshaft pulley to measure torque acting on the camshaft in a gasoline engine running under its own power. However, as the camshaft pulley is situated on an extremity of the camshaft, and is external to the engine block, the potential problems of vibrational distortion remain.

Thus, there remains a need for an apparatus and a method for the measurement of torque experienced by the camshaft of a valve train of an internal combustion engine whilst in operation, in which vibrational distortion is eliminated or at least mitigated.

Thus, according to a first aspect of the present invention, there is provided an apparatus for the measurement of torque on the camshaft in the valve train of an internal combustion engine, which apparatus comprises a camshaft having at least one camshaft lobe group, characterised in that at least one camshaft lobe group has one or more torque transducers.

An advantage of the present invention is that, when used in the measurement of torque on the camshaft in the valve train of an internal combustion engine, the camshaft is rotated by the engine, rather than by a device situated external to the engine. Therefore, the camshaft of the present invention experiences forces directly related to the operation of the engine. Furthermore, because the one or more torque transducers are located away from the camshaft ends, less vibrational distortion may be experienced.

The camshaft of the present invention comprises one or more torque transducers and at least one camshaft lobe group. A camshaft lobe group comprises one or more camshaft lobes. The number of camshaft lobes in each camshaft lobe group is determined by the nature of the internal combustion engine in which the camshaft of the present invention may be used. For example, if the engine has a single camshaft, and each cylinder unit comprises a single inlet valve and a single outlet valve, then there will be two camshaft lobes in each camshaft lobe group; one to operate the inlet valve, the other to operate the outlet valve of each cylinder unit. For cylinder units comprising more than one inlet and more than one outlet valve, the number of camshaft lobes in each camshaft lobe group will be correspondingly higher.

For an internal combustion engine that comprises more than one camshaft, for example a dual-camshaft engine, one camshaft may be used to operate the inlet valves of the cylinder units, whilst the other camshaft may operate the outlet valves. If the engine comprises only a single inlet valve and a single outlet valve per cylinder unit, then each camshaft will comprise one camshaft lobe in each camshaft lobe group.

The camshaft of the present invention may be connected to a camshaft pulley that is engageable with a camshaft drive of the internal combustion engine. The camshaft pulley is rotatable by the camshaft drive of the engine by known means, such as through a belt-driven camshaft rotation mechanism, or by a geared camshaft rotation mechanism. Preferably, the camshaft is capable of being rotated by a geared camshaft rotation mechanism.

A problem with a gear-driven camshaft mechanism is that the rotational forces involved are generally stronger than belt-driven mechanisms, and transmit greater vibrational interference. Thus, the apparatus described in the aforementioned Mufti article, wherein the torque transducer is situated on the camshaft pulley of a belt-driven camshaft, may not advantageously be applied to a gear-driven camshaft because the torque measurements could suffer from a greater degree of vibrational interference. An advantage of the present invention is that it mitigates such interference when applied to a gear-driven camshaft.

In one embodiment, the apparatus of the present invention has at least two camshaft lobes in each camshaft lobe group, with a torque transducer situated between camshaft lobes within the same camshaft lobe group. In an alternative embodiment, the camshaft has at least two camshaft lobe groups, with a torque transducer located adjacent to a camshaft lobe and between two camshaft lobe groups. In a further embodiment, a torque transducer is integrated with, or is located on, one or more camshaft lobes. In a preferred embodiment, a torque transducer replaces one or more camshaft lobes. In a particularly preferred embodiment, a torque transducer replaces one camshaft lobe group. If the torque transducer itself is not capable of operating the valves of a cylinder unit, then the camshaft will comprise at least one further camshaft lobe group that it is capable of operating an internal combustion engine when located therein. In such an embodiment, the number of cylinder units of the internal combustion engine in which it may be suitably located, is equal at least to the sum of torque transducers on the camshaft plus the number of camshaft lobe groups that remain on the camshaft. Preferably, the apparatus of the present invention comprises a single torque transducer which replaces one camshaft lobe group.

Each torque transducer of the present invention is capable of converting torque experienced by the camshaft into transmittable signals. The signals may be transmitted to a signal processor which is capable of converting the signals into quantitative data representing the torque experienced by the camshaft. The signals may be transmitted, for example, as an electronic signal through electrically conducting wires, as an optical signal through optical fibres, or by suitable wireless transmission employing electromagnetic radiation. Preferably, the signal is transmitted electronically through two or more electrically conducting wires.

In a preferred embodiment of the present invention, each torque transducer is capable of transmitting signals electronically through two or more electrically conducting wires, wherein the two or more wires from each torque transducer are connected to a set of slip rings (one slip ring for each electrically conducting wire) that are located on the camshaft such that, if the camshaft is located within an internal combustion engine, the slip rings are not obstructed by any of the engine parts. In a preferred embodiment of the present invention, each slip ring is located on the camshaft external to the engine block. Each slip ring connects to a signal processor by means of one or more electrically conducting wires arranged such that, if the camshaft of the present invention is rotated, the wires remain in contact with the slip ring, for example through a brush-type contact. In a preferred embodiment of the present invention, the camshaft comprises a slip-ring assembly, which assembly comprises a plurality of separate slip rings, for example 2, 4, 8, 10, 20 or 36 slip rings, which are all contained within a single apparatus.

A preferred torque transducer comprises a torque tube consisting of a shaft having one or more strain gauges. The one or more strain gauges of the torque tube serve to convert the torque experienced by the torque tube into electrically transmittable signals.

The signal processor is capable of converting the transmitted signals into corresponding quantitative data representing the instantaneous and/or mean torque experienced by the torque transducer and camshaft. The signal processor may be an electronic meter, or more preferably a programmed computer.

The camshaft of the present invention is capable of being a constituent part of the valve train of an internal combustion engine. The valve train of an internal combustion engine comprises those parts of the engine which operate the valves of the cylinder units by converting rotational motion of the camshaft into reciprocating motion of the valves, and includes the camshaft, the camshaft lobes, the drive unit for rotating the camshaft, the valves of the cylinder units, and the associated valve components, such as the valve follower, the valve spring, the valve stem and, where appropriate, the rocker arm bearing. The one or more cylinder units of the internal combustion engine are where the fuel is combusted, the energy released therein being transformed into mechanical motion, typically by means of a piston. The operation of the one or more pistons of an engine typically rotates a crankshaft, which rotational motion may be transferred to the camshaft of the valve train through a camshaft drive. It is preferable that the camshaft of the present invention is capable of being situated within an internal combustion engine in place of a regular camshaft typically used for the engine, without the need to substantially modify the shape or location of any engine part. Thus, the camshaft of the present invention preferably does not impinge on any engine components to any greater extent than a regular camshaft for the same engine.

The camshaft of the present invention is suitably capable of being used as part of the valve train of a gasoline engine, a diesel engine, or a heavy-duty diesel engine, preferably a heavy-duty diesel engine. For internal combustion engines which comprise more than one camshaft, the camshaft of the present invention is preferably able to fit within the engine in place of any one of the regular camshafts of the engine.

The camshaft of the present invention may also have one or more additional sensors for the measurement of other parameters. For example, the camshaft may have a temperature sensor. The temperature sensor may be integrated into, attached to or adjacent to one or more torque transducers, or a camshaft lobe. The temperature sensor is capable of transmitting signals to a temperature signal processor. The temperature signal processor may be part of a signal processor, preferably a signal processor which is used for the processing the signals from the torque transducer, for example a programmed computer. The signals from the temperature sensor may also be transmitted by means similar to those which transmit the signals of the one or more torque transducers, preferably electronically through two or more electrically conducting wires and a set of slip rings suitably located on the camshaft.

In a further embodiment, the present invention provides an internal combustion engine having a camshaft as described herein. The engine may be a gasoline engine, a diesel engine or a heavy-duty diesel engine, preferably a heavy duty diesel engine. The camshaft may be connected to a camshaft pulley and rotated by means of the camshaft drive of the internal combustion engine using, for example, a belt driven camshaft rotation mechanism or a geared camshaft rotation mechanism. Preferably, the camshaft is capable of being rotated by a geared camshaft rotation mechanism.

The apparatus of the present invention may be used for the measurement of torque on the camshaft in the valve train of an internal combustion engine. Thus, according to a further aspect of the present invention, there is also provided a method for the measurement of torque on the camshaft in the valve train of an internal combustion engine, which camshaft comprises at least one camshaft lobe group, which method comprises;
(a) providing the camshaft with one or more torque transducers, such that at least one camshaft lobe group has one or more torque transducers,
(b) operating the internal combustion engine to rotate the camshaft,
(c) transmitting the signals from the one or more torque transducers to a signal processor, and
(d) processing the signals in the signal processor to provide quantitative data representing the torque of the camshaft in the valve train.

In the method of the present invention, the one or more torque transducers of the camshaft of the internal combustion engine, in which valve train friction is to be measured, transmits signals to a signal processor, which converts the transmitted signals into quantitative data representing the instantaneous and/or mean torque experienced by the torque transducers and camshaft.

The signals transmitted by each torque transducer relate to instantaneous and/or mean friction experienced by the camshaft in the valve train. Preferably, the signals relating to both instantaneous and mean torque are transmitted from the torque transducer to the signal processor, and the signal processor converts signals relating to both instantaneous and mean torque into quantitative data relating to both instantaneous and mean torque experienced by the camshaft within the valve train.

The torque experienced by a camshaft of an internal combustion engine (the drive torque) is composed of frictional torque and geometrical torque. The frictional torque is a function of lubrication. Geometric torque arises from the force required to open the valves against the resistance of the valve spring, the energy from which is stored in the valve spring and returned to the camshaft as torque in the opposite rotational direction as the valve closes. The processor may determine the mean of the drive torque over a cam cycle to remove the geometric torque and yield an average cyclic frictional torque. Correction may be needed for friction forces experienced by other parts of the valve-train, for example the valve stem, the rocker arm bearing (if present), unsymmetrical cam lobe lifts or variations of hydraulic pressure in the hydraulic lash adjuster follower. The determination of frictional torque is described by Mufti et al in the article previously mentioned. Thus, the present invention also provides a method of determining frictional torque on a camshaft in a valve train.

The camshaft is located within the valve train of an internal combustion engine, wherein the camshaft is connected to a camshaft pulley, and at least one camshaft lobe group has one or more torque transducers. The camshaft used in the method of the present invention is preferably a camshaft according to the apparatus of the present invention, as hereinbefore described.

For internal combustion engines comprising more than one camshaft, any number of the camshafts may have at least one camshaft lobe group having one or more torque transducers. Thus, in a dual camshaft engine, either one or both the camshafts may have at least one camshaft lobe group with a torque transducer. The internal combustion engine is any engine which comprises a valve train, such as a gasoline engine, a diesel engine or a heavy-duty diesel engine. Preferably, the internal combustion engine is a heavy-duty diesel engine.

The signals are transmitted from the one or more torque transducers to the signal processor electronically through electrically conducting wires, as an optical signal through optical fibres, or via wireless transmission employing electromagnetic radiation. Preferably, each torque transducer transmits the signals electronically, wherein each torque transducer is connected by two or more electrically conducting wires to a set of slip rings, wherein each slip ring is connected to a signal processor through at least one electrically conducting wire. One or more amplifiers may additionally be employed to boost signals being transmitted to the signal processor.

The signal processor is any device that is capable of processing the transmitted signals from the one or more torque transducers to provide quantitative data representing the torque on the camshaft in the valve train. Examples of suitable devices include an electronic torque meter, or preferably a suitably programmed computer.

If the method of the present invention comprises transmission of signals by more than one torque transducer, each torque transducer, and hence each set of slip rings, may be connected to separate signal processors, or may alternatively be connected to one signal processor that is able separately or simultaneously to process all the signals from the different torque transducers. Preferably, all the torque transducers are connected to one signal processor, which is a suitably programmed computer.

In another embodiment of the method of the present invention, the camshaft also has a temperature sensor. The temperature sensor is capable of transmitting signals to a temperature signal processor using similar means to the signals transmitted by the one or more torque transducers, which is preferably electronically through two or more electrically conducting wires via a set of slip rings suitably located on the camshaft.

The invention will now be illustrated by way of example only, and with reference to the drawings in which Figure 1 represents a longitudinal view of a camshaft according to the present invention, Figure 2 is a perspective view of a torque transducer according to the present invention, and Figure 3 is a graph of torque measurements obtained using a method according to the present invention.

### EXAMPLE

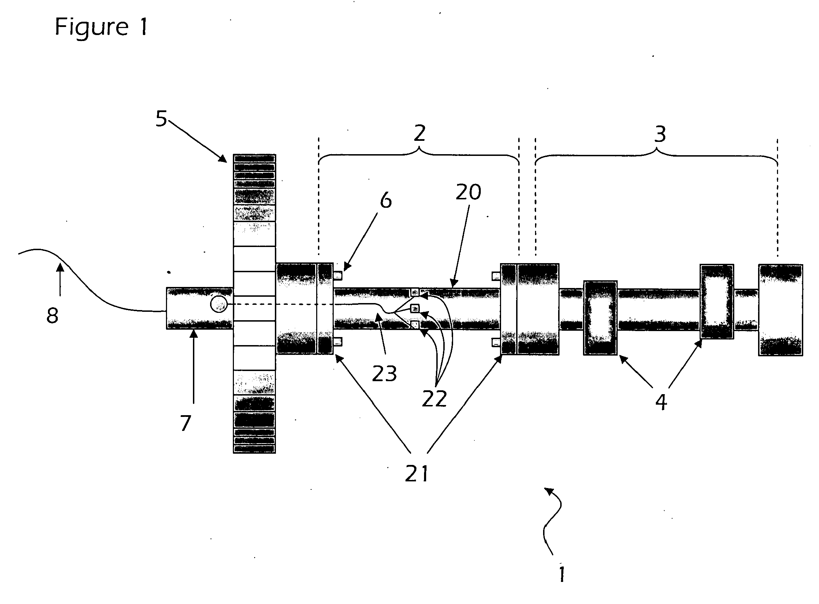

Figure 1 shows a longitudinal view of an apparatus according to the present invention which comprises a camshaft (1) with a torque transducer (2) and one camshaft lobe group (3) having two camshaft lobes (4). The torque transducer is connected to the camshaft lobe group and a camshaft pulley (5) by flanges (21) and bolts (6). The torque transducer consists of a torque tube (20) with a series of strain gauges (22) connected by wires (23) to a slip ring assembly (7). Wires (11) connect the non-rotating portion of the slip ring to the signal processor (not shown).

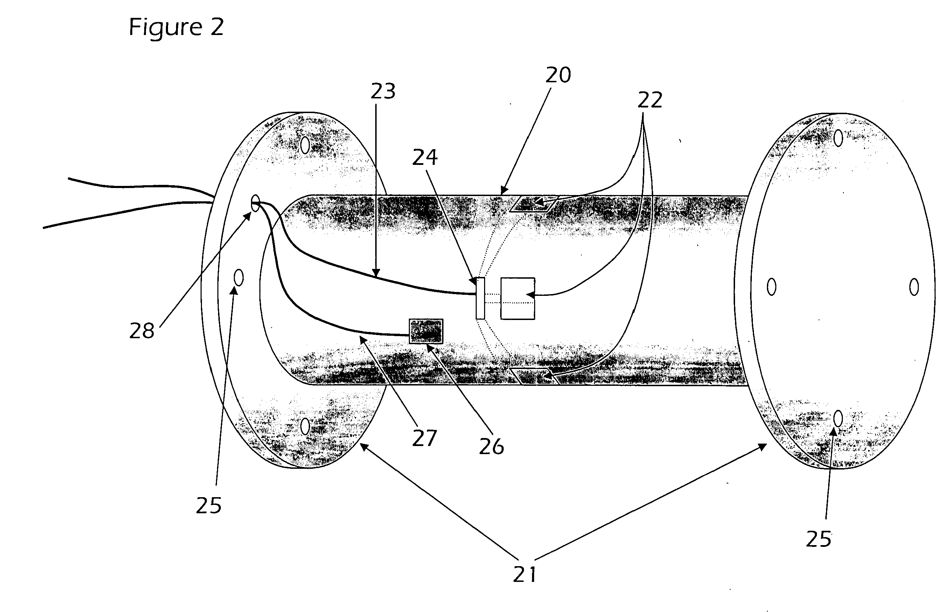

Figure 2 shows the torque transducer (2) of Figure 1 in more detail, showing the flanges (21), the torque tube (20) and the strain gauges (22) connected in a Wheatstone bridge circuit through a connector unit (24) to wires (23) for transmitting the signals to a signal processor (not shown). The flanges have bolt-holes (25) for connecting the transducer to the camshaft and camshaft pulley. Also shown is a temperature sensor (26) connected by wires (27) for transmitting the temperature signals to a temperature signal processor (not shown). The wires (23) and (27) pass through an additional hole (28) in the flange.

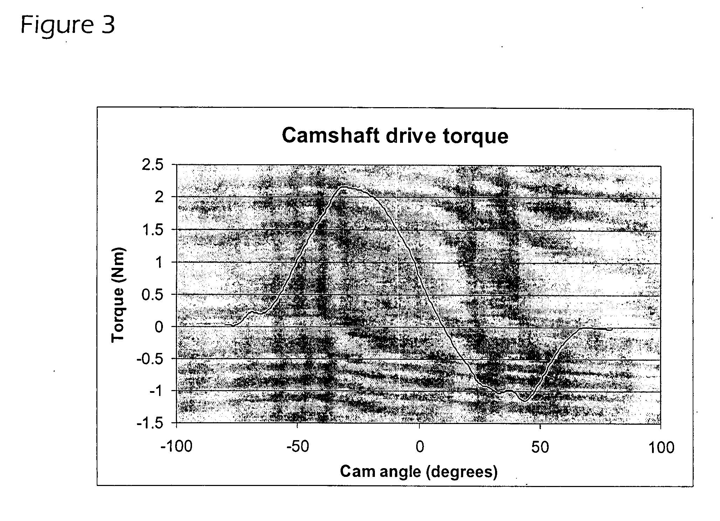

In a method for measuring camshaft torque according to the present invention, a camshaft comprising a torque transducer, as shown in Figures 1 and 2, was fitted to a Cummins 6B5.9 heavy duty diesel engine. The engine was operated at 750 rpm for two hours at an oil temperature of 50°C under motored conditions. Torque data were obtained by connecting the torque transducer to a Fylde 379TA transducer amplifier, which in turn was connected to a computer through a National Instruments PCI-6120 data acquisition card via a connector block. The computer used Labview software to control the data acquisition system. An example of camshaft torque measured using this method is shown in Figure 3. The frictional torque may be determined from the torque measurement, for example as described by Mufti et al in the above-mentioned article.

## Claims

1. An apparatus for the measurement of torque on the camshaft in the valve train of an internal combustion engine, which apparatus comprises a camshaft having at least one camshaft lobe group, **characterised in that** at least one camshaft lobe group has one or more torque transducers.

2. An apparatus as claimed in claim 1, wherein the camshaft is connected to a camshaft pulley.

3. An apparatus as claimed in claim 2, wherein the camshaft pulley is gear-driven.

4. An apparatus as claimed in any one of claims 1 to 3, wherein each of the one or more torque transducers replaces a camshaft lobe group, and the camshaft has at least one camshaft lobe group in addition to the one or more torque transducers.

5. An apparatus as claimed in any one of claims 1 to 4, wherein the camshaft also has at least one temperature sensor.

6. An apparatus as claimed in any one of claims 1 to 5, wherein each torque transducer is connected by at least two wires to a set of slip rings on the camshaft (one slip ring for each wire).

7. An apparatus as claimed in claim 6, wherein the slip rings are external to the engine block.

8. An apparatus as claimed in any one of claims 1 to 7, wherein the camshaft is located within the valve train of an internal combustion engine.

9. An apparatus as claimed in claim 8, wherein the internal combustion engine is a heavy duty diesel engine.

10. A method for the measurement of torque on the camshaft in the valve train of an internal combustion engine, which camshaft comprises at least one camshaft lobe group, which method comprises;
(a) providing the camshaft with one or more torque transducers, such that at least one camshaft lobe group has one or more torque transducers,
(b) operating the internal combustion engine to rotate the camshaft,
(c) transmitting the signals from the one or more torque transducers to a signal processor, and
(d) processing the signals in the signal processor to provide quantitative data representing the torque of the camshaft in the valve train.

11. A method as claimed in claim 9, wherein the camshaft is an apparatus according to any one of claims 1-7.

12. A method as claimed in claim 10 or claim 11, wherein the camshaft is rotated using a geared rotation mechanism.

13. A method as claimed in any one of claims 10 to 12, wherein the internal combustion engine is a heavy duty diesel engine.

14. A method as claimed in any one of claims 10 to 13, wherein the signal processor converts signals relating to both instantaneous and mean torque into quantitative data relating to both instantaneous and mean torque experienced by the camshaft within the valve train.
